(19) Europäisches Patentamt
European Patent Office
Office européen des brevets

(11) **EP 3 478 495 B1**

(12) **EUROPEAN PATENT SPECIFICATION**

(45) Date of publication and mention
of the grant of the patent:
**28.10.2020 Bulletin 2020/44**

(51) Int Cl.:
**B32B 13/04** *(2006.01)*          **B32B 5/20** *(2006.01)*
**B32B 7/08** *(2019.01)*          E04C 2/288 *(2006.01)*

(21) Application number: **17734288.8**

(22) Date of filing: **28.06.2017**

(86) International application number:
**PCT/EP2017/065935**

(87) International publication number:
**WO 2018/002104 (04.01.2018 Gazette 2018/01)**

(54) **POLYURETHANE CONCRETE SANDWICH COMPONENTS AND METHOD FOR PREPARING THE SAME**

POLYURETHAN-BETON-SANDWICHKOMPONENTEN UND VERFAHREN ZU DEREN HERSTELLUNG

COMPOSANTS EN SANDWICH EN BÉTON ET EN POLYURÉTHANE ET LEUR PROCÉDÉ DE PRÉPARATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.07.2016 CN 201610511243**

(43) Date of publication of application:
**08.05.2019 Bulletin 2019/19**

(73) Proprietor: **Covestro Intellectual Property GmbH & Co. KG**
**51373 Leverkusen (DE)**

(72) Inventors:
• **SHI, Lei**
**Shanghai 200042 (CN)**

• **CAO, Jia**
**Shanghai 201906 (CN)**
• **GAO, Jianwu**
**Shanghai 201901 (CN)**
• **ZHANG, Chenxi**
**Shanghai 200135 (CN)**

(74) Representative: **Levpat**
**c/o Covestro AG**
**Gebäude 4825**
**51365 Leverkusen (DE)**

(56) References cited:
**US-A1- 2004 040 239    US-A1- 2007 245 640**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Technical Field**

The present invention relates to polyurethane concrete based insulation elements, and specifically relates to a method for preparing polyurethane concrete sandwich elements.

Background Art

At present, the development of new insulation element is vigorously promoted, and especially in construction field, prefabricated building is popularized aggressively. Prefabricated building has advantages of reducing construction waste and dust pollution, shortening construction period, and improving construction quality. Nevertheless, the production engineering of wallboard and floorslab in early prefabricated conduction still includes a lot of steps for manually laying insulation boards (mostly XPS boards), and there is no unified acceptance specification for the distance between seams. Prefabricated building components stay for a too long time at the station of laying an insulating layer, and hence much manual work is required. Moreover, the thus produced finished parts involve much hidden dangers which are unfavorable for the health development of housing industrialization.

Presently in the construction field, insulation boards are usually spliced between a concrete slab(s) and/or a decorative plate. Nevertheless, such way of splicing would generally result in seams and gaps between the insulation board and the concrete slab(s) and/or decorative plate with which the insulation connects. Owing to the seams and gaps, the water vapor would condense, which would increase the likelihood of water percolation and leakage of the walls after a building is finished, as well as the likelihood of the corrosion of connecting elements and connecting steel bars due to moisture attacks.

Polyurethane sandwich elements for the construction industry wherein a polyurethane foam is formed *in situ* between two surface layers are disclosed in US 2004/040239 A1 and in US 2007/245640 A1.

**Summary of the Invention**

In order to address the aforementioned technical problem, the present invention provides a method for manufacturing a polyurethane concrete sandwich component comprising a first surface layer, a second surface layer and a polyurethane sandwich layer, wherein the first surface layer and the second surface layer are respectively located on two surfaces of the polyurethane sandwich layer, and at least one of the first surface layer and the second surface layer is a concrete layer, and wherein said method comprises the following steps:

i) forming the first surface layer and the second surface layer in molds, wherein the first surface layer and the second surface layer are arranged opposite to each other, and the opposite faces of the first surface layer and the second surface layer are arranged spaced apart from each other, i.e., forming a cavity;

ii) making the two surface layers arranged opposite to each other in the molds obtained from step i), as a whole, form an angle of 1-45° relative to the horizontal plane;

iii) applying a polyurethane reaction system into the cavity formed in step i); and

iv) solidifying the polyurethane reaction system in the cavity to form polyurethane foams, thereby forming a polyurethane concrete sandwich component,

wherein the cavity between the first surface layer and the second surface layer is formed as follows: a) forming the first surface layer and the second surface layer in the first mold and the second mold respectively, wherein the first mold and the second mold each have one surface that is unclosed, wherein at least one of the first mold and the second mold have a wall height greater than the thickness of the surface layer formed in the molds; and b) arranging the first surface layer located in the first mold and the second surface layer located in the second mold opposite to each other, and making each edges of the unclosed faces of the first mold and the second mold contact and having them sealed, thereby forming a cavity between the first surface layer and the second surface layer. In this embodiment, the cavity in step i) of the inventive method is formed of the walls of the first mold and the second mold.

In a preferred embodiment of the inventive method, the contact of the first mold and the second mold is a snap-fit connection.

In a preferred embodiment of the inventive method, the concrete layer has a thickness of 3 to 30 cm.

In a preferred embodiment of the inventive method, the first surface layer and the second surface layer are linked via a steel bar truss or a bolt.

In a preferred embodiment of the inventive method, at the beginning of the reaction, the polyurethane reaction system has an intrinsic viscosity at 25 °C of 50-500 mPa•s, preferably 100-300 mPa•s.

In a preferred embodiment of the inventive method, the polyurethane reaction system is injected into the cavity by means of reaction injection molding (RIM).

In a preferred embodiment of the inventive method, the foaming pressure for reaction injection molding is 10-200 $KN/m^2$.

The inventive method optimizes the existing production process by, for example, raising the wall height of the molding of at least one side of the concrete plate to form a cavity favorable for production. Moreover, the inventive method, keeping the transformation of the production flows of the present technology to the minimum, can rapidly form a seamless insulation layer system. Thus, the inventive method prevents the condensation of water vapor between the seams of the insulating board, avoids water percolation and leakage of the walls after the building is finished, and avoids the corrosion of connecting elements and connecting steel bars due to moisture attacks. The inventive method also decreases the manual cost for laying insulating material, enhances production efficiency, and improves the durability of prefabricated concrete wallboard and floorslab.

In a polyurethane concrete sandwich element that is prepared according to the method of the present invention, the foam of the polyurethane sandwich layer may have an apparent density of 20-200 $kg/m^3$.

## Specific Mode for Carrying Out the Invention

The present invention provides a method for the production of a polyurethane concrete sandwich element component comprising a first surface layer, a second surface layer and a polyurethane sandwich layer, wherein the first surface layer and the second surface layer are respectively located on two surfaces of the polyurethane sandwich layer, and at least one of the first surface layer and the second surface layer is a concrete layer, and wherein said method comprises the following steps:

> i) forming the first surface layer and the second surface layer in molds, wherein the first surface layer and the second surface layer are arranged opposite to each other, and the opposite faces of the first surface layer and the second surface layer are arranged spaced apart from each other, i.e., forming a cavity;
> ii) making the two surface layers arranged opposite to each other in the molds obtained from step i), as a whole, form an angle of 1-45°, preferably 1-30° relative to the horizontal plane;
> iii) applying a polyurethane reaction system into the cavity formed in step i); and
> iv) solidifying the polyurethane reaction system in the cavity to form polyurethane foams, thereby forming a polyurethane concrete sandwich component,

wherein the cavity between the first surface layer and the second surface layer is formed as follows: a) forming the first surface layer and the second surface layer in the first mold and the second mold respectively, wherein the first mold and the second mold each have one surface that is unclosed, wherein at least one of the first mold and the second mold have a wall height that is greater than the thickness of the surface layer formed in the molds; and b) arranging the first surface layer located in the first mold and the second surface layer located in the second mold opposite to each other, and making each edges of the unclosed faces of the first mold and the second mold contact and having them sealed, thereby forming a cavity between the first surface layer and the second surface layer.

In the method according to the present invention, forming a cavity between the first surface layer and the second surface layer means that the first surface layer and the second surface layer are disposed not in contact, but are apart by a space. The cavity in step i) of the inventive method is formed of the walls of the first mold and the second mold.

In a preferred embodiment of the present invention, the contact of the first mold and the second mold is a snap-fit connection.

In a preferred embodiment of the inventive method, the polyurethane reaction system is injected into the cavity via injection holes which are disposed on at least one side of the cavity formed of the walls of the first mold and the second mold. In a preferred embodiment of the inventive method, the injection holes on at least one side of the cavity have a number of 1-10, preferably 1-5.

In the method of the present invention, the height of the cavity is not particularly limited, and can be regulated according to practical requirements, for example 2-10 cm. For example, when it is desired to enhance the insulation effect, the height of cavity may be increased; when it is desired to decrease the insulation effect, the height of cavity may be reduced.

In the method of the present invention, concrete layer may be formed in the following way: providing unhardened concrete in a mold, and hardening the unhardened concrete to form a hardened concrete layer. In the method of the present invention, preferably, the unhardened concrete is hardened after maintenance, so as to form a hardened concrete layer. In the method of the present invention, the concrete layer may have a thickness of 2-50 cm, preferably 3-30 cm.

In the method of the present invention, it is preferable to connect the first surface layer and the second surface layer via a steel bar truss or anchor bolt. Specifically, the first surface layer and the second surface layer may be connected in the following way: in the preparation of the first concrete surface layer and the second concrete surface layer in concrete, vertically inserting a steel bar truss or anchor bolt in the unhardened first surface layer or second surface layer located in the first mold or the second mold. The number of the inserted steel bar truss or anchor bolt depends on practical requirements, and is not particularly limited here, with the proviso that the connection of the first surface layer and the second surface layer can be realized or other functions desired in building can be realized. The steel bar truss is inserted at the whole unhardened first or second surface layer. The anchor bolt is inserted at the four edges of the unhardened first or second surface layer.

In the method of the present invention, term "concrete" has common meaning in the art, and refers to a composition comprising inorganic binder (for example cement), filler (for example gravel and sand), water and optional additives and/or adjuvants. The cement has common meaning in the art and refers to the dry powder prepared from components such as calcined limestone, silica, alumina, lime, ferric oxide, magnesium oxide and clay. Term "concrete" also covers "mortar" commonly used in the art. The "concrete" and "mortar" involved in the present invention differ in composition merely in terms of the maximum particle size of the fillers used in the preparation of said composition. The term "mortar" refers to the composition prepared using fillers having the maximum particle size at most 4 mm, while the term "concrete" refers to the composition prepared using coarse fillers. In the present invention, the terms "concrete" and "mortar" are not further distinguished.

In the method of the present invention, term "unhardened concrete" refers to the concrete prior to forming fundamental strength, i.e. concrete before final set, wherein the final set time can be measured according to GB/T 50080-2002 (Standard for Test Method of Performance on Ordinary Fresh Concrete, Chapter IV, test of setting time).

In the method of the present invention, besides concrete layer, other ornamental layers may also be included. Other ornamental layers may be those made of the same material and having the same thickness as concrete layer, or may be those made of different materials and having thickness different from the concrete layer. Other ornamental layers may, for example be ornamental board. The ornamental board may be any commercially available decorative sheet used as building material, for example lime sheet and ceramic plate. The decorative sheet may have a thickness of 3-15 cm, preferably 5-10 cm.

In the method of the present invention, the polyurethane reaction system may be the foam system commonly used for preparing polyurethane in construction field, especially the polyurethane reaction system used in reaction injection molding (RIM).

In one specific embodiment of the present invention, the polyurethane reaction system comprises:

> a) one or more organic polyisocyanates;
> b) one or more polyols:
> c) one or more foaming agents; and
> d) one or more catalysts.

Component a): Polyisocyanate

The organic polyisocyanate that may be used for preparing polyurethane foam include organic diisocyanate, which may be any aliphatic, alicyclic or aromatic isocyanate used for preparing polyurethane. Examples include, but are not limited to: 2,2'-, 2,4- and 4,4'-diphenyl-methane-diisocyanate (MDI); the mixture of monomeric diphenyl-methane-diisocyanate and diphenyl-methane-diisocyanate homologues bearing more rings (polymeric MDI); isophorone diisocyanate (IPDI) or oligomers thereof; toluene diisocyanate (TDI), for example, toluene diisocyanate isomers such as toluene-2,4- or 2,6-diisocyanate, or the mixtures thereof; tetramethylene diisocyanate or oligomers thereof; hexamethylene diisocyanate (HDI) or oligomers thereof; and diisocyanatonaphthalene (NDI) or mixtures thereof.

In the examples of the present invention, organic polyisocyanate includes isocyanates based on diphenyl-methane-diisocyanat, especially those including polymeric MDI. Organic polyisocyanates have a functionality of preferably 1.5 to 3.5, particularly preferably 2.5 to 3.3, and have a viscosity of preferably 5 to 600 mPas, particularly preferably 10 to 300 mPas, which is measured at 25 according to DIN 53015. Said isocyanate component may have a content of 50 to 60 wt.%, based on 100 wt.% of the total weight of said polyurethane composition.

In the present invention, polyols that can be used as component b) are selected from polyether polyols. The polyether polyols have a hydroxyl value of 200 to 500 mg KOH/g, preferably 250 to 350 mg KOH/g, and have a functionality of 2 to 6, preferably 3 to 5. The polyether polyols have a content of 20 wt.% to 90 wt.%, based on 100 wt.% of the total weight of said polyurethane composition.

Said polyether polyols may be prepared by a known processing, for example, by reacting olefin oxide and initiators in the presence of catalysts. Said catalysts are preferably, but not limited to, alkali hydroxides, alkali alkoxide, antimony pentachloride, boron fluoride etherate, or mixtures thereof. Said olefin oxides are preferably, but not limited to, tetrahydrofuran, ethylene oxide, propylene oxide, 1,2-butylene oxide, 2,3-butylene oxide, styrene oxide, or mixtures thereof, particularly preferably ethylene oxide and/or propylene oxide. Said initiators are preferably, but not limited to polyols or polyamine compounds. Said polyols are preferably, but not limited to, water, ethylene glycol, 1,2- propanediol, 1,3- propanediol, diethylene glycol, trimethylolpropane, glycerol, bisphenol A, bisphenol S, or the mixtures thereof. Said polyamine compounds are preferably, but not limited to, ethylene diamine, propane diamine, butanediamine, hexamethylendiamine, diethylene triamine, toluenediamine or mixtures thereof. Polyether polyols may also be unsaturated polyether polyols.

The polyurethane reaction system that can be used in the present invention also comprises a foaming agent c). The foaming agent may be selected from physical foaming agents or chemical foaming agents, and are preferably, but not limited to water, halogenated hydrocarbons, hydrocarbon compounds, and gas. Said halogenated hydrocarbons are preferably, but not limited to, monochlorodifluoromethane, dichloromonofluoromethane, dichlorofluoromethane, trichlorofluoromethane, or mixtures thereof. Said hydrocarbons are preferably, but not limited to butane, pentane, cyclopentane, hexane, cyclohexane, heptanes, or mixtures thereof. Said gas is preferably, but not limited to air, $CO_2$, or $N_2$. The polyurethane reaction system that can be used in the present invention may comprise catalyst. The catalyst is preferably, but not limited to, amine catalysts, organic metal catalysts, or mixtures thereof. Said amine catalysts are preferably, but not limited to triethylamine, tributylamine, triethylenediamine, N-ethylmorpholine, N,N,N',N'- tetramethyl ethylenediamine, Pentamethyldiethylenetriamine, N,N- methylaniline, N,N- dimethylaniline, or mixtures thereof. Said organic metal catalysts are preferably, but not limited to, organic tin compounds, for example tin acetate (II), tin octoate (II), tin ethylhexanate, tin laurate, dibutyltin oxide, dibutyltin dichloride, dibutyl tin diacetate, dibutyltin maleate, dioctyl tin diacetate, or mixtures thereof. Said catalyst is in an amount of 0.001-10 wt.%, based on the weight of 100 wt.% of said isocyanate reactive component.

Those skilled in the art, according to specific requirements, could add into said polyurethane composition other components, for example, but not limited to adjuvants such as silicone oil.

In the polyurethane composition, the weight ratio of A) isocyanate component and B) isocyanate reactive component is determined according to NCO index X, wherein X is preferably 200 to 600. The NCO index X is defined by the following formula:

$$X(\%) \frac{[\text{moles of isocyanate group (NCO group) in A component}]}{[\text{moles of isocyanate reactive group(s) in B component}]} \times 100\%$$

In the method of the present invention, the polyurethane reaction system is a high flow system, and thus it is necessary to control the viscosity of the polyurethane reaction system at the beginning of the reactions. Specifically, the intrinsic viscosity at 25 °C of the polyurethane reaction system is 10 to 1000 mPa•s, preferably 50 to 500 mPa•s, more preferably 100 to 300 mPa•s, at the beginning of the reaction.

In the method of the present invention, the inclination angle is 1 to 45°, preferably 1-30°, more preferably 5 to 15°.

In the method of the present invention, the application of polyurethane reaction system into the cavity may be carried out via a reaction injection molding. The reaction injection molding machine mixes the components of the inventive polyurethane reaction system in amounts defined in the present invention via respective mixing head under pressure until they are mixed homogenously. Then the homogenized components are immediately injected into the formed cavity and cure.

In the method of the present invention, it is preferable that the reaction injection molding has a foaming pressure of 10 to 200 KN/m$^2$, preferably 20 to 160 KN/m$^2$, and more preferably 30 to 80 KN/m$^2$.

In the method of the present invention, the reaction injection device that can be used is all those used for polyurethane injection molding in the prior art, for example Henecke H-650 or H-1250 type reaction injection molding machine.

In a polyurethane concrete sandwich element which prepared according to the method of the present invention, the polyurethane sandwich layer foam may have an apparent density of 20 to 200 kg/m$^3$, preferably 30 to 100 kg/m$^3$, and more preferably 40 to 70 kg/m$^3$.

In the present invention, the foam density is apparent density measured according to GB/T 6343-2009 (*Cellular plastics and rubbers-Determination of apparent density*) (ISO845:2006 *Cellular plastics and rubbers-Determination of apparent density,* IDT), with the unit being kg/m$^3$.

The present invention would be described in a more detailed way in the following text.

**Example**

Starting material and device

Polyurethane rigid foam system, a polyurethane reaction system, the viscosity being 135 mPa•s (25); Reaction injection mold machine, type H-1250 available from Henecke.

Preparation of Concrete Insulation Building Panel

5 cm height of unhardened concrete was laid in the first mold, steel bar trusses were inserted into said unhardened concrete in the mold spaced apart from each other, wherein the first mold has a wall higher than the thickness 3 cm of the concrete layer, thereby forming an unhardened first surface layer. Then the first layer was maintained to harden. Likewise, unhardened concrete was laid in the second mold which has the same thickness 5 cm as that of the concrete layer, thereby forming a second surface layer. Subsequently, the first surface layer in the first mold was flipped over together with the first mold. After flipping over, the first mold charging the first surface layer and the second mold charging the second surface layer are sealed at the edge, and the steel bar trusses that have been inserted into the hardened first surface layer was inserted into the unhardened second surface layer. After the hardening of the first surface layer and the second surface layer, a cavity was formed of the first mold charging the first surface layer and the second mould charging the second surface layer between the first surface layer and the second surface layer, wherein one side of the cavity had two homogeneously distributed injection holes. The first mold, the first surface layer located in the mold, steel bar trusses, the second mold and the second surface layer located in the mold, which have been integrated by sealing, were inclined as a whole, wherein the inclination angle was 5° relative to the horizontal plane.

Next, the polyurethane reaction system listed in table 1, after homogenously mixed via the mixing head of the reaction injection molding machine, was injected into the cavity through the injection hole on the cavity within 20 seconds. The polyurethane reaction system having a foaming pressure of 30 KN/m$^2$ cured in the cavity, thereby forming a polyurethane insulation layer.

Table 1 cavity filling degree of polyurethane reaction system

| | Polyurethane reaction system | intrinsic viscosity of polyurethane reaction system (25°C), mPa•s | Inclination angle, ° | Filling degree of polyurethane reaction system in cavity |
|---|---|---|---|---|
| Example 1 | Polyurethane rigid foam system | 135 | 5 | totally |
| Example 2 | Polyurethane rigid foam system | 135 | 10 | totally |
| Example 3 | Polyurethane rigid foam system | 135 | 15 | totally |
| Example 4 | Polyurethane rigid foam system | 135 | 12 | totally |
| Comparative example 1 | Polyurethane rigid foam system | 135 | 0 | partially |

**Claims**

1. A method for manufacturing a polyurethane concrete sandwich component comprising a first surface layer, a second surface layer and a polyurethane sandwich layer, wherein the first surface layer and the second surface layer are respectively located on two surfaces of the polyurethane sandwich layer, and at least one of the first surface layer and the second surface layer is a concrete layer, and wherein said method comprises the following steps:

i) forming the first surface layer and the second surface layer in molds, wherein the first surface layer and the second surface layer are arranged opposite to each other, and the opposite faces of the first surface layer and the second surface layer are arranged spaced apart from each other, i.e., forming a cavity;

ii) making the two surface layers arranged opposite to each other in the molds obtained from step i), as a whole, form an angle of 1-45° relative to the horizontal plane;

iii) applying a polyurethane reaction system into the cavity formed in step i); and

iv) solidifying the polyurethane reaction system in the cavity to form polyurethane foams, thereby forming a polyurethane concrete sandwich component,

wherein the cavity between the first surface layer and the second surface layer is formed as follows:

a) forming the first surface layer and the second surface layer in the first mold and the second mold respectively, wherein the first mold and the second mold each have one surface that is unclosed, wherein at least one of the first mold and the second mold have a wall height greater than the thickness of the surface layer formed in the molds;

b) arranging the first surface layer located in the first mold and the second surface layer located in the second mold opposite to each other, and making each edges of the unclosed faces of the first mold and the second mold contact and having them sealed, thereby forming a cavity between the first surface layer and the second surface layer.

2. The method according to claim 1, wherein the contact of the first mold and the second mold is a snap-fit connection.

3. The method according to claim 1 or 2, wherein the concrete layer has a thickness of 2 to 50 cm.

4. The method according to any one of claims 1-3, wherein the first surface layer and the second surface layer are linked via a steel bar truss or a bolt.

5. The method according to any one of claims 1-4, wherein, at the beginning of the reaction, the polyurethane reaction system has an intrinsic viscosity at 25°C of 10-1000 mPa•s.

6. The method according to any one of claims 1-5, wherein the polyurethane reaction system is injected into the cavity by means of reaction injection molding.

7. The method according to claim 6, wherein the foaming pressure for reaction injection molding is 10-200 KN/m$^2$.

**Patentansprüche**

1. Verfahren zum Fertigen einer Polyurethan-Beton-Sandwichkomponente, umfassend eine erste Oberflächenschicht, eine zweite Oberflächenschicht und eine Polyurethan-Sandwichschicht, wobei die erste Oberflächenschicht und die zweite Oberflächenschicht sich jeweils auf zwei Oberflächen der Polyurethan-Sandwichschicht befinden, und mindestens eine von der ersten Oberflächenschicht und der zweiten Oberflächenschicht eine Betonschicht ist, und wobei das Verfahren die folgenden Schritte umfasst:

i) Bilden der ersten Oberflächenschicht und der zweiten Oberflächenschicht in Formen, wobei die erste Oberflächenschicht und die zweite Oberflächenschicht einander gegenüber angeordnet sind, und die gegenüber liegenden Seiten der ersten Oberflächenschicht und der zweiten Oberflächenschicht voneinander beabstandet angeordnet sind, d. h. einen Hohlraum bilden;

ii) Bewirken, dass die beiden Oberflächenschichten, die in den aus Schritt i) erhaltenen Formen einander gegenüber angeordnet sind, einen Winkel von 1 bis 45° relativ zu der Horizontalebene bilden;

iii) Applizieren eines Polyurethanreaktionssystems in den in Schritt i) gebildeten Hohlraum; und

iv) Verfestigen des Polyurethanreaktionssystems in dem Hohlraum, um Polyurethanschäume zu bilden, wodurch eine Polyurethan-Beton-Sandwichkomponente gebildet wird,

wobei der Hohlraum zwischen der ersten Oberflächenschicht und der zweiten Oberflächenschicht folgendermaßen gebildet wird:

a) Bilden der ersten Oberflächenschicht und der zweiten Oberflächenschicht in der ersten Form beziehungsweise der zweiten Form, wobei die erste Form und die zweite Form jeweils eine Oberfläche aufweisen, die nicht geschlossen ist, wobei mindestens eine von der ersten Form und der zweiten Form eine Wandhöhe aufweisen, die größer als die Dicke der in den Formen gebildeten Oberflächenschicht ist;
b) Anordnen der ersten Oberflächenschicht, die sich in der ersten Form befindet, und der zweiten Oberflächenschicht, die sich in der zweiten Form befindet, einander gegenüber, und Bewirken, dass die jeweiligen Ränder der nicht geschlossenen Seiten der ersten Form und der zweiten Form in Kontakt miteinander kommen und versiegelt werden, wodurch ein Hohlraum zwischen der ersten Oberflächenschicht und der zweiten Oberflächenschicht gebildet wird.

2. Verfahren nach Anspruch 1, wobei der Kontakt der ersten Form und der zweiten Form eine Einrastverbindung ist.

3. Verfahren nach Anspruch 1 oder 2, wobei die Betonschicht eine Dicke von 2 bis 50 cm aufweist.

4. Verfahren nach einem der Ansprüche 1 bis 3, wobei die erste Oberflächenschicht und die zweite Oberflächenschicht über einen Stahlbalkenträger oder -bolzen verknüpft sind.

5. Verfahren nach einem der Ansprüche 1 bis 4, wobei das Polyurethanreaktionssystem am Anfang der Reaktion eine Grenzviskosität bei 25 °C von 10 bis 1000 mPa·s aufweist.

6. Verfahren nach einem der Ansprüche 1 bis 5, wobei das Polyurethanreaktionssystem mittels Reaktionsspritzguss in den Hohlraum injiziert wird.

7. Verfahren nach Anspruch 6, wobei der Schäumungsdruck zum Reaktionsspritzguss 10 bis 200 KN/m$^2$ beträgt.

**Revendications**

1. Procédé de fabrication d'un composant sandwich de béton et de polyuréthane comprenant une première couche de surface, une deuxième couche de surface et une couche sandwich en polyuréthane, dans lequel la première couche de surface et la deuxième couche de surface sont respectivement situées sur deux surfaces de la couche sandwich en polyuréthane, et au moins l'une de la première couche de surface et de la deuxième couche de surface est une couche de béton, et ledit procédé comprenant les étapes suivantes :

i) former la première couche de surface et la deuxième couche de surface dans des moules, dans lequel la première couche de surface et la deuxième couche de surface sont disposées de façon opposée l'une à l'autre, et les faces opposées de la première couche de surface et de la deuxième couche de surface sont disposées de façon à être espacées l'une de l'autre, c'est-à-dire en formant une cavité ;
ii) faire en sorte que les deux couches de surface disposées de façon opposée l'une à l'autre dans les moules obtenues à l'étape i) forment ensemble un angle de 1 à 45 ° par rapport au plan horizontal ;
iii) appliquer un système de réaction pour polyuréthane dans la cavité formée à l'étape i) ; et
iv) solidifier le système de réaction pour polyuréthane dans la cavité pour former des mousses de polyuréthane, en formant ainsi un composant sandwich de béton et de polyuréthane,

dans lequel la cavité entre la première couche de surface et la deuxième couche de surface est formée comme il est indiqué ci-dessous :

a) former la première couche de surface et la deuxième couche de surface dans le premier moule et dans le deuxième moule respectivement, dans lequel le premier moule et le deuxième moule comportent chacun une surface qui n'est pas fermée, dans lequel au moins l'un du premier moule et du deuxième moule a une hauteur de paroi supérieure à l'épaisseur de la couche de surface formée dans les moules ;
b) disposer la première couche de surface située dans le premier moule et la deuxième couche de surface située dans le deuxième moule de façon opposée l'une à l'autre, et faire en sorte que chaque bord des faces non fermées du premier moule et du deuxième moule entre en contact avec l'autre bord et les fermer de façon étanche, en formant ainsi une cavité entre la première couche de surface et la deuxième couche de surface.

2. Procédé selon la revendication 1, dans lequel le contact du premier moule et du deuxième moule est un enclenchement.

**3.** Procédé selon la revendication 1 ou 2, dans lequel la couche de béton a une épaisseur de 2 à 50 cm.

**4.** Procédé selon l'une quelconque des revendications 1 à 3, dans lequel la première couche de surface et la deuxième couche de surface sont reliées par un support sous la forme d'une barre d'acier ou un boulon.

**5.** Procédé selon l'une quelconque des revendications 1 à 4, dans lequel, au début de la réaction, le système de réaction pour polyuréthane a une viscosité intrinsèque à 25 °C de 10 à 1 000 mPa•s.

**6.** Procédé selon l'une quelconque des revendications 1 à 5, dans lequel le système de réaction pour polyuréthane est injecté dans la cavité en utilisant un procédé de moulage par injection et réaction.

**7.** Procédé selon la revendication 6, dans lequel la pression de formation de la mousse pour le moulage par injection et réaction est de 10 à 200 KN/m$^2$.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2004040239 A1
- US 2007245640 A1